(19) Europäisches Patentamt
European Patent Office
Office européen des brevets

(11) **EP 3 629 072 B1**

(12) **EUROPEAN PATENT SPECIFICATION**

(45) Date of publication and mention
of the grant of the patent:
**15.09.2021   Bulletin 2021/37**

(51) Int Cl.:
*G02B 27/10* (2006.01)      *G02B 27/12* (2006.01)
*G02B 5/04* (2006.01)      *G02B 27/01* (2006.01)
*G02F 1/31* (2006.01)      *G06T 3/40* (2006.01)
*G02F 1/29* (2006.01)      *G02F 1/13* (2006.01)

(21) Application number: **18860996.0**

(22) Date of filing: **27.09.2018**

(86) International application number:
**PCT/KR2018/011361**

(87) International publication number:
**WO 2019/066453 (04.04.2019 Gazette 2019/14)**

(54) **OPTICAL SWITCH AND IMAGE SYSTEM USING SAME**

OPTISCHER SCHALTER UND BILDSYSTEM DAMIT

COMMUTATEUR OPTIQUE ET SYSTÈME D'IMAGERIE L'UTILISANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.09.2017   RU 2017133993
03.09.2018   KR 20180104779**

(43) Date of publication of application:
**01.04.2020   Bulletin 2020/14**

(73) Proprietor: **Samsung Electronics Co., Ltd.
Suwon-si, Gyeonggi-do 16677 (KR)**

(72) Inventors:
• **MURAVEV, Nikolay Victorovich**
**Moscow Region 142114 (RU)**
• **PISKUNOV, Dmitriy Evgenyevich**
**Moscow Region 141290 (RU)**
• **RYU, Jae-yeol**
**Moscow 127018 (RU)**
• **MOROZOV, Aleksander Victorovich**
**Moscow Area 142155 (RU)**
• **POPOV, Mikhail Viacheslavovich**
**Moscow Region 143402 (RU)**
• **POLONSKY, Stanislav Vladimirovich**
**Moscow 117036 (RU)**
• **PUTILIN, Andrey Nikolaevich**
**Moscow 109462 (RU)**

(74) Representative: **HGF
1 City Walk
Leeds LS11 9DX (GB)**

(56) References cited:
WO-A1-2018/124799      JP-A- 2012 133 024
KR-A- 20100 075 366      US-A1- 2004 239 885
US-A1- 2004 263 698      US-A1- 2013 044 274
US-A1- 2013 314 763      US-A1- 2014 049 661
US-A1- 2017 052 380

**Description**

TECHNICAL FIELD

The present disclosure relates in general to imaging technology and, more particularly, to an optical switch and an imaging system that may generate high resolution images and eliminate a "grid effect".

BACKGROUND ART

This section is not intended to provide the key ideas of the present disclosure, nor any limitation thereof. The sole purpose of this section is to provide the reader with a brief description of prior art solutions belonging to the same technical field as the present disclosure and shortcomings of the prior art solutions so that the reader may appreciate why the present disclosure is important.

As is known, the resolution of the human eye is limited to 60 pixels/degree, which is sufficient to enable a viewer to comfortably view the visual content on traditional displays of smartphones, monitors, television sets. This is due to the fact that the visual content displayed on these displays is viewed by the human eye within a small field of view (FOV).

Meanwhile, displays of VR devices have optical systems providing a larger FOV than traditional optical systems. In VR devices, the resolution of the entire VR system is no more than 15 pixels/ degree, which is insufficient for the human eye. Therefore, images generated by the VR devices generally have a low resolution. Thus, a problem arises when a viewer wants to use VR devices, such as VR glasses or helmets.

Another problem is that the images displayed by VR devices often have a visual artifact characterized by the presence of visible clear lines separating pixels in each image. This artifact is generally referred to as a "grid effect", because the viewer feels as if he/she is looking at the image through a mesh screen formed by the aforementioned clear lines. The "grid effect" appears when the image is so greatly scaled that the viewer may see space between light-emitting diodes (LEDs) forming the pixel structure on the display. Thus, images generated by VR devices also have the "grid effect".

There exist a variety of prior art solutions to overcome the above problems. One of them is described in US 20140049661 A1, which teaches a method of generating a higher resolution still image. According to this method, a video camera may be configured at a first configuration to capture frames with a first pixel offset. Then, the configuration of the video camera is adjusted to a second configuration to capture frames with a second pixel offset. However, this method is applicable only to a camera and cannot be applied to a visual system. Furthermore, the document does not disclose a pixel offset mechanism.

Another solution, described in US 6,587,180 B2, relates to a system of beam steering using an electrical operation. The system provides for two embodiments. According to a first embodiment, the system comprises a grating and a liquid crystal material. When the liquid crystal is unenergized, there is a mismatch between the index of refraction of the liquid crystal and the grating, causing the grating to diffract light in a specified direction. When the liquid crystal is energized to match its index of refraction to the grating, the light is not diffracted by the grating, and hence travels in a different direction than it would when the liquid crystal is not energized. According to a second embodiment, the system is formed by electrically generated gratings using a liquid crystal material. However, the prior art system is expensive and difficult to manufacture.

Therefore, there is a need for an imaging system capable of generating high resolution images free from a "grid effect". It is desirable that the system would be simple, convenient and inexpensive to manufacture, and be head mountable to enable its use in VR applications.

DESCRIPTION OF EMBODIMENTS

TECHNICAL PROBLEM

Provided are an optical switch capable of reducing or eliminating a "grid effect" and an image display system including the same.

SOLUTION TO PROBLEM

According to an aspect of the present disclosure, an optical switch includes an electrically controlled optical shutter configured to alternately pass and block light beams incident thereon; and a prism array comprising prisms separated from each other by gaps and configured to deflect the light beams that pass through the optical shutter and are incident on the prisms by a predetermined deflection angle, and being positioned on the optica shutter, wherein the optical shutter is configured to operate in a first mode of operation in which the light beams incident on the gaps between the prisms of the prism array are passed and the light beams incident on the prisms are blocked and a second mode of operation in which the light beams incident on the gaps between the prisms of the prism array are blocked and the light beams incident on the prisms are passed.

Any one of the first mode of operation and the second mode of operation may correspond to a case where no electrical signal is applied to the optical shutter, and the other one may correspond to a case where an electrical signal is applied to the optical shutter.

Also, the first mode of operation may correspond to the case where no electric signal is applied to the optical shutter, and the second mode of operation may correspond to the case where an optical signal is applied to the optical shutter.

The prism array may be positioned on a side of the optical shutter where the light beams are incident or on a side opposite to the side where the light beams are incident.

Also, the optical shutter may include at least one of an optico-mechanical shutter, an electro-optical shutter, or a magneto-optical shutter.

The optical shutter may include two transparent substrates; two transparent electrodes positioned between the two transparent substrates; a liquid crystal layer positioned between the two transparent substrates; and at least two polarizing plates configured to control light transmission of liquid crystals in the liquid crystal layer, wherein the prism array is arranged on a surface of at least one of the two transparent substrates.

Also, in the first mode of operation, first regions of the liquid crystal layer corresponding to the prisms may be opaque to the light beams, and second regions of the liquid crystal layer corresponding to the gaps between the prisms may be transparent to the light beams, and in the second mode of operation, the first regions of the liquid crystal layer corresponding to the prisms may be transparent to the light beams, and the second regions of the liquid crystal layer corresponding to the gaps between the prisms may be opaque to the light beams.

The first regions of the liquid crystal layer may overlap with the prisms with respect to an optical axis, and the second regions of the liquid crystal layer may not overlap with the prisms with respect to the optical axis.

At least one of the at least two polarizing plates may be arranged in front of one of the two transparent substrates, and at least one other of the at least two polarizing plates may be arranged behind the other of the two transparent substrates.

The transparent substrates and at least one of the prisms may be made of at least one of optical glass, polymer or crystal.

The transparent electrodes may be made from an alloy including at least one of indium-tin oxide (ITO) or indium-zinc oxide (IZO).

At least some of the prisms of the prism array may be in any one of linear, circular, checkerboard, and arbitrary arrangements.

At least one of the prisms may have a wedge shape or has at least one of a varying thickness or refractive index to provide a predetermined angle of deflection of the light beams.

According to another aspect of the present disclosure, an image display system includes a display having a pixel structure and configured to emit light beams characterizing a given image; the above-described optical switch configured to pass and deflect light beams from the display; and a synchronization unit configured to control operations of the display and the optical switch, wherein the synchronization unit may be further configured to control the operations of the display and the optical switch by alternately generating and sending, to the display and the optical shutter, first electrical signals that control the display to emit the light beams characterizing the given image, and simultaneously control the optical shutter to operate in a first mode of operation, and second electrical signals that control the display to emit light beams characterizing an image shifted by being offset relative to the given image by a predetermined value, and simultaneously control the optical shutter to transit to a second mode of operation.

The image display system may further include at least one lens positioned between the display and the optical switch to redirect the light beams from the display towards the prism array and to form images.

At least one of the first and second electrical signals may be a sync pulse.

The synchronization unit may include one or more controllers to control the operations of the display and the optical switch.

The synchronization unit may include a first controller configured to control the operation of the display and a second controller configured to control the operation of the optical switch.

The predetermined value may be selected such that pixels of the shifted image are positioned between pixels of the given image.

A frequency of switching between the first and second electrical signals may be 120 Hz or more.

The system according to the second aspect of the present disclosure may be used in glasses or a helmet for virtual reality or augmented reality.

Other features and advantages of the present disclosure will become apparent after reading the following description and viewing the accompanying drawings.

ADVANTAGEOUS EFFECTS OF DISCLOSURE

Images with an increased resolution may be provided by reducing or eliminating a grid effect.

BRIEF DESCRIPTION OF DRAWINGS

The essence of the present disclosure will be explained below with reference to the accompanying drawings, in which:

FIG. 1 is a schematic diagram of an imaging system according to an embodiment of the present disclosure.
FIGS. 2 to 5 illustrate exemplary arrangements of prisms.
FIG. 6 illustrates a liquid crystal cell in an optical shutter according to an embodiment.
FIGS. 7 and 8 are reference diagrams for explaining modes of operation of the optical shutter.
FIG. 9 illustrates the principle of operation of the imaging system of FIG. 1.
FIGS. 10 to 12 are diagrams for explaining parameters of prisms according to an embodiment.

MODE OF DISCLOSURE

Various embodiments of the present disclosure will be further described in more detail with reference to the accompanying drawings. However, the present disclosure may be implemented in many other forms and should not be understood as being limited to any particular structure or function as presented in the following description. On the contrary, these embodiments are provided to make the description of the present disclosure more detailed and complete. Based on the present disclosure, it will be apparent to those skilled in the art that the scope of the present disclosure encompasses any embodiment of the present disclosure that is disclosed herein, regardless of whether this embodiment is implemented independently or in conjunction with any other embodiment of the present disclosure. For example, the apparatus or system disclosed herein may be implemented in practice using any number of embodiments set forth herein. Furthermore, it should be comprehended that any embodiment of the present disclosure may be implemented using one or more of the elements recited in the attached claims.

The word "exemplary" is used herein in the meaning of "used as an example or illustration". Any embodiment described herein as "exemplary" should not necessarily be perceived as preferred or advantageous over other embodiments.

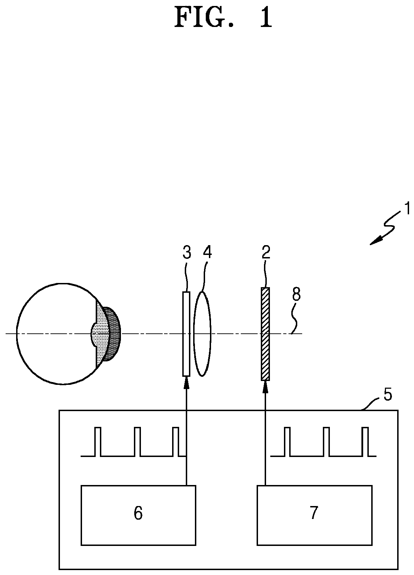

FIG. 1 shows schematically an imaging system 1 according to an exemplary embodiment of the present disclosure. The imaging system 1 is an example of implementing separate control of operation of a display 2 and an optical switch 3 (but not limited thereto). The imaging system 1 may include the display 2, the optical switch 3, a lens 4, and synchronization unit 5 implemented as a single processor or a set of two processors or controllers 6 and 7. In the embodiment with a single processor or controller (not shown), the processor may control simultaneously the operation of the display 2 and the optical switch 3. In the embodiment with a set of two processors or controllers 6 and 7, one of the processors or controllers may control the operation of the display 2 and the other may control the operation of the optical switch 3. Each component of the image system 1 will be further described in detail.

The display 2 has a pixel structure and may be configured to emit light beams characterizing a given image towards the user's eyes (for simplicity, only one eye is shown in FIG. 1), i.e. along an optical axis 8. The display 2 may be a display of a smart phone, a mobile phone, a tablet computer or a digital media player. Moreover, the display 2 may be implemented as a light-emitting diode display (LED display), an organic light-emitting diode display (OLED display) or a liquid crystal display (LCD), depending on the particular application.

The lens 4 may be used to provide proper redirection of light beams from the display 2 towards the optical switch 3. To this end, the lens 4 may be positioned between the display 2 and the optical switch 3. The lens 4 may be of any type suitable to collimate the light beams emitted by the display 2. Such lenses are well known to those skilled in the art, and for this reason, no detailed description thereof will be given herein.

The optical switch 3 may be designed to pass and deflect light beams from the display 2 for a certain period of time (in particular, until the display 2 is turned off). A feature of the optical switch 3 used in the imaging system 1 may include an electrically controlled optical shutter (not shown in FIG. 1) configured to alternately pass and block light beams incident thereon (from the display 2), and a prism array (not shown in FIG. 1) for deflecting the light beams that have passed through the optical shutter by a predetermined deflection angle (calculation of the deflection angle will be discussed below).

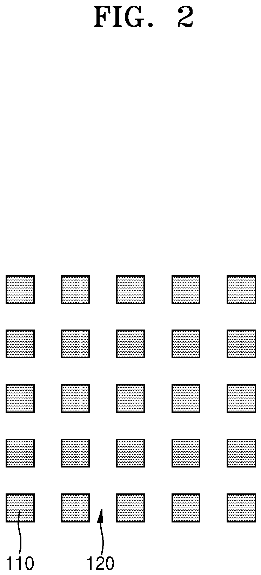

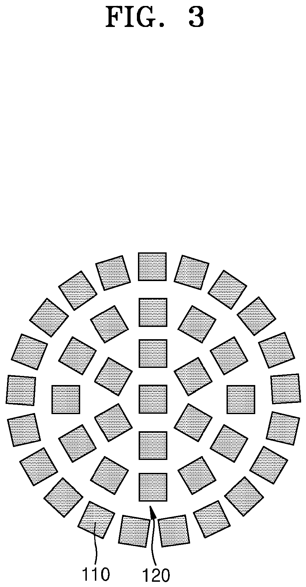

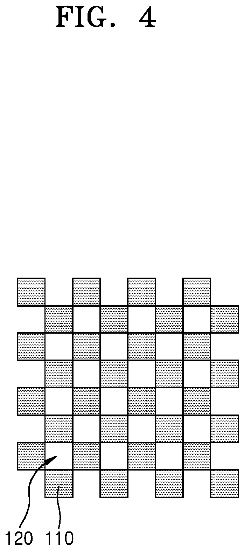

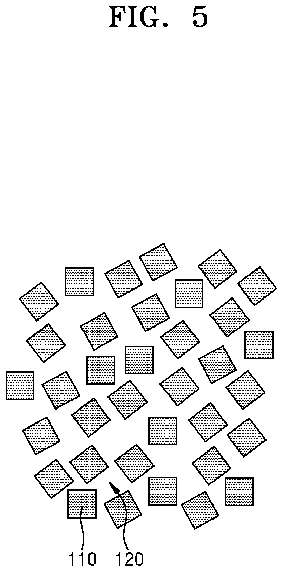

Prisms may be positioned on the side of the optical shutter opposite to the beam incidence side, or on the beam incidence side. Moreover, prisms may be separated from each other by a constant or varying gap. FIGS. 2 to 5 illustrate various arrangements of prisms 110 on the surface of an optical shutter. The prisms 110 of a prism array may be disposed in the linear arrangement as shown in FIG. 2, and in the circular arrangement as shown in FIG. 3. Alternatively, the prisms 110 may be disposed in the checkerboard arrangement as shown in FIG. 4, and in the arbitrary arrangement as shown in FIG. 5. Furthermore, the prisms 110 may have a wedge shape or a varying thickness or refractive index to provide a predetermined angle of deflection of light beams.

In one embodiment, the optical shutter may be implemented as an optico-mechanical shutter, an electro-optical shutter, or a magneto-optical shutter. All these types of optical shutters are well known to those skilled in the art. In particular, the principle of operation of optico-mechanical shutters is based on shutting light beams by mechanical displacement of blinds, mirrors, prisms, and the like. The operation of the electro-optical shutter is based on the use of a linear (Pockels effect) or quadratic (Kerr effect) electro-optical effect, i.e. dependence of the birefringence of a medium on the strength of the electric field applied thereto. Such an electro-optical shutter may generally consist of an electro-optical cell positioned between two parallel (or crossed) polarizing plates. The electro-optical shutter may be controlled by applying an appropriate voltage to the electro-optical cell. As regards the magneto-optical shutter, the principle of its operation may be based on a linear magneto-optical phenomenon (Faraday effect), i.e. the dependence of the angle of rotation of the plane of polarization of light propagating in a medium on the intensity of magnetic field applied thereto. The magneto-optical shutter may include a Faraday cell (optical medium located in the magnetic field of a solenoid), which is mounted between two crossed polarizing plates. The shutter may be controlled by varying the current of the solenoid. Thus, the present disclosure may use any of the above optical shutters.

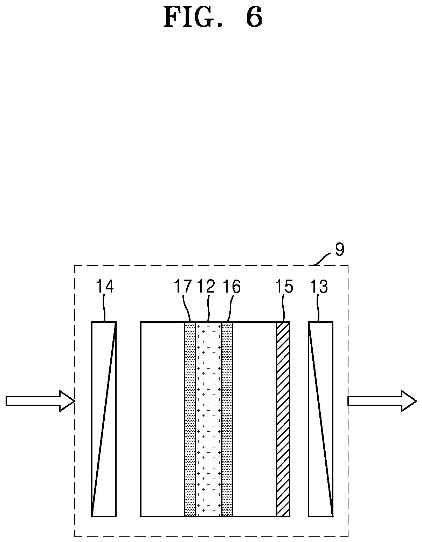

Meanwhile, according to a preferred embodiment of the present disclosure, the optical shutter may include a liquid crystal cell 9 schematically shown in FIG. 6. In particular, the liquid crystal cell 9 may consist of two transparent substrates, a liquid crystal layer 12 positioned between the two transparent substrates, and two polarizing plates 13 and 14 for controlling the light transmission of liquid crystals in the liquid crystal layer 12. One of the polarizing plates 13 and 14 may be disposed in front of the liquid crystal layer 12, and the other behind the liquid crystal layer 12. As will be apparent to a person skilled in the art, the number of polarizing plates may be more than two, depending on the particular application and specific requirements imposed on the imaging system 1.

The transparent substrates may be made of optical glass, polymer or crystal. In the preferred embodiment, the prism array 15 may be disposed on the outer surface of one of the two transparent substrates parallel to the liquid crystal layer 12. The liquid crystal cell 9 may further include sets of transparent electrodes 16 and 17 for applying electric field to the liquid crystal layer 12. The sets of transparent electrodes 16 and 17 may be made, for example, from indium-tin oxide (ITO) material or from indium-zinc oxide (IZO) alloy.

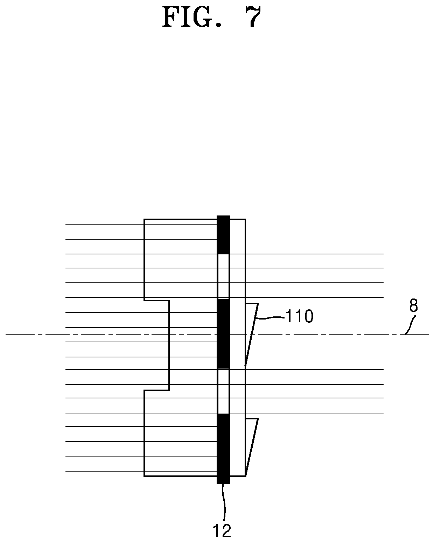

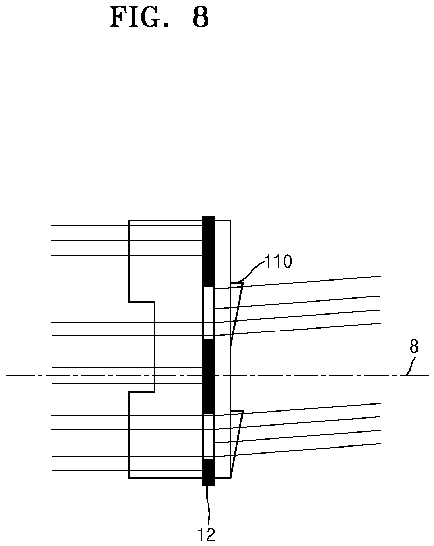

According to the present disclosure, the optical shutter used in the imaging system 1 may be configured to operate in two modes of operation. In a first mode of operation, the optical shutter passes light beams incident towards gaps between prisms of the prism array and blocks light beams incident towards the prisms. In a second mode of operation, the reverse situation may be observed. That is, the optical shutter blocks light beams incident towards gaps between prisms of the prism array and passes light beams incident towards the prisms. With respect to the embodiment of the optical shutter shown in FIG. 6, in the first mode of operation, first regions which are portions of the liquid crystal layer 12 corresponding to the prisms (i.e. portions of the liquid crystal layer 12 lying under the prisms) may be opaque to light beams, and second regions which are portions of the liquid crystal layer 12 corresponding to gaps between the prisms of the liquid crystal layer 12 may be transparent to light beams (see FIG. 7). The first regions may overlap with the prisms with respect to the optical axis of light beams incident on the optical shutter, and the second regions may not overlap with the prisms with respect to the optical axis of light beams incident on the optical shutter. In the second mode of operation, the first regions which are the portions of the liquid crystal layer 12 corresponding to the prisms (i.e. portions of the liquid crystal layer 12 lying under the prisms) may be transparent to light beams, and the second regions which are the portions of the liquid crystal layer 12 corresponding to the gaps between the prisms may be opaque to light beams (see FIG. 8). Furthermore, the first mode of operation may correspond to the case where no electric signal is applied to the optical shutter from the synchronization unit 5 (i.e. the controller 6), and the second mode of operation may correspond to the case where an electric signal is applied to the optical shutter from the synchronization unit 5 (i.e. the controller 6), or vice versa. That is, the first mode of operation may correspond to the case where an electric signal is applied to the optical shutter from the synchronization unit 5, and the second mode of operation may correspond to the case where no electrical signal is applied to the optical shutter from the synchronization unit 5.

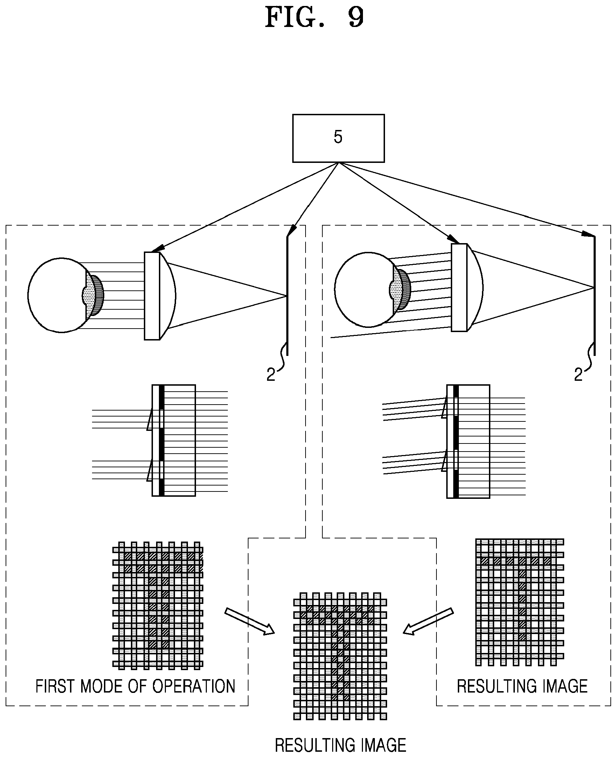

Referring to FIGS. 1 and 9, the synchronization unit 5 may control the operation of the display 2 and the optical switch 3 by alternately generating and sending to them first electric signals and second electrical signals in the form of e.g. sync pulses. The first electrical signals may control the display 2 to emit light beams characterizing a given (low resolution) image and simultaneously may control the optical switch 3 to operate in the first mode of operation (for example, by applying no electrical signal to the optical shutter). The second electrical signals may control the display 2 to emit light beams characterizing a shifted image that is to be offset from the given image by a predetermined value, and simultaneously may control the optical switch 3 to transit to the second mode of operation.

In an embodiment, the synchronization unit 5 may be switched between the first and second electric signals at a frequency of 120 Hz or more. Therefore, the user's eyes will see alternately the given image and the shifted image, and will see the resulting image with an increased resolution (increased number of pixels; in FIG. 9, pixels are shown as small black squares).

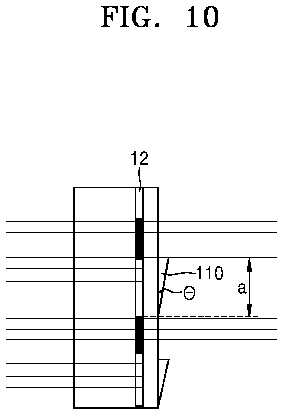

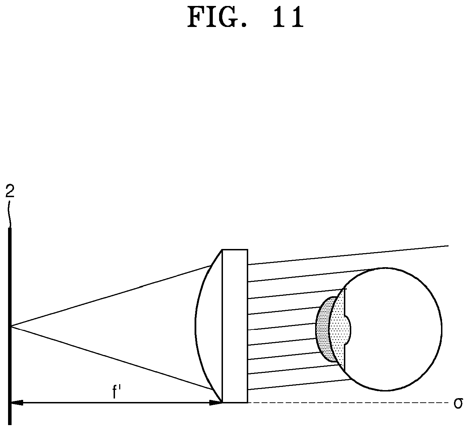

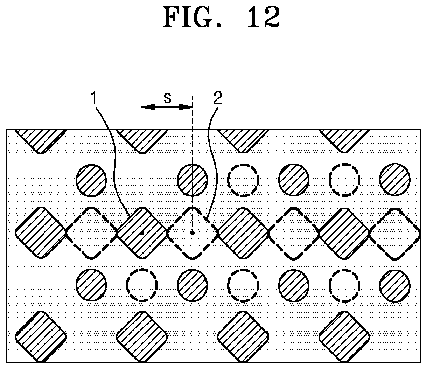

The predetermined value to which the shifted image is to be offset relative to the given image may be selected depending on how many times the resolution of the resulting image is to be increased, and the offset may occur in different directions (diagonally, horizontally and vertically) by one value (1/2 of a pixel, 1/3 of a pixel, etc.) For example, for 2 times increase in the resolution of the resulting image, the offset is required by 1/2 of a pixel. For 3 times increase, the offset is required by 1/3 of a pixel first and then by 2/3 of a pixel. For 4 times increase, the offset is required by 1/4, 1/2, and 3/4 of a pixel sequentially. While increasing the resolution by 3, 4, and so forth times, it is necessary to add, respectively, a second, third and so forth type of prisms. The types of prisms may differ in the angle of inclination or orientation of the inclined face of the prism, where the angle of inclination may determine the amount of offset by 1/4, 1/2, and 3/4 of a pixel, and the position of the inclined face may determine the direction of offset. A method of selecting the sizes and shapes of the prisms that are required to implement the present disclosure will be explained below with reference to FIGS. 10 to 12. The size of the prism 110 designated as "a" in FIG. 10 should be several times smaller than the size of the pupil to enable viewing simultaneously the shifted and unshifted (given) image. The pupil size varies in the range of about 3 to 8 mm. Therefore, the size of the prism 110 should be 0.2-1.0 mm.

The angle of deflection of light beams may be denoted by the symbol σ. The angle of deflection is related with the refracting angle θ of the prism 110 by Equation 1 below (with small incidence angles as in the case under consideration):

[Equation 1]

$$\sigma = \Theta(n-1)$$

where n is the refractive index of the prism material.

The angle θ may be determined from Equation 1 above, knowing the required deflection angle σ. The deflection angle σ may be determined from Equation 2 below:

[Equation 2]

$$\sigma = \tan(s/f')$$

where s is the distance equal to half the distance between pixels, and f' is the focal length of the lens 4 (see FIGS. 7 and 8).

The method described above enables determining all necessary prism parameters used in the present disclosure.

Therefore, there is provided an imaging system that may increase the resolution of images and thereby reduce or even eliminate a "grid effect". To this end, the system may include an optical switch including an electrically controlled optical shutter described with reference to FIGS. 1 and 6 to 9, and a prism array of spatially spaced apart prisms and positioned on the side of the optical shutter described with reference to FIGS. 2 and 10 to 12. The present system is applicable in VR, AR devices, such as VR and AR glasses and helmets.

The imaging system may be applied in situations where it is necessary to provide a user immersion in virtual reality for performing various tasks such as 3D modeling, navigation, design, etc. The imaging system may be also implemented in various head-mounted devices, such as virtual reality (VR) glasses or helmets that are currently popular in gaming and educational industries.

Further aspects of the invention will become apparent upon consideration of the drawings and the description of embodiments of the present disclosure. It will be understood by those skilled in the art that other embodiments of the present disclosure are possible and that certain elements of the present disclosure may be modified in a number of aspects.

Thus, the drawings and the description should be considered as an illustration, not a limitation. In the appended claims, the elements mentioned in the singular do not exclude the presence of a plurality of such elements unless explicitly stated otherwise.

**Claims**

1. An optical switch (3) comprising:

   an electrically controlled optical shutter configured to alternately pass and block light beams incident thereon; and
   a prism array comprising prisms (110) separated from each other by gaps and configured to deflect the light beams that pass through the optical shutter and are incident on the prisms (110) by a predetermined deflection angle, and being positioned on the optical shutter,
   wherein the optical shutter is configured to operate in a first mode of operation in which the light beams incident on the gaps between the prisms (110) of the prism array are passed and the light beams incident on the prisms (110) are blocked, and in a second mode of operation in which the light beams incident on the gaps between the prisms (110) of the prism array are blocked and the light beams incident on the prisms (110) are passed.

2. The optical switch (3) of claim 1, wherein any one of the first mode of operation and the second mode of operation corresponds to a case where no electrical signal is applied to the optical shutter, and the other one corresponds to a case where an electrical signal is applied to the optical shutter.

3. The optical switch (3) of claim 1, wherein the prism array is positioned on a side of the optical shutter where the light beams are incident or on a side opposite to the side where the light beams are incident.

4. The optical switch (3) of claim 1, wherein the optical shutter comprises:

   two transparent substrates (10, 11);
   two transparent electrodes (16, 17) positioned between the two transparent substrates (10, 11);
   a liquid crystal layer (12) positioned between the two transparent substrates (10, 11); and
   at least two polarizing plates (13, 14) configured to control light transmission of liquid crystals in the liquid crystal layer (12),
   wherein the prism array (15) is arranged on a surface of at least one of the two transparent substrates (10, 11).

5. The optical switch (3) of claim 4, wherein in the first mode of operation, first regions of the liquid crystal layer (12) corresponding to the prisms (110) are opaque to the light beams, and second regions of the liquid crystal layer (12) corresponding to the gaps between the prisms (110) are transparent to the light beams, and

in the second mode of operation, the first regions of the liquid crystal layer (12) corresponding to the prisms (110) are transparent to the light beams, and the second regions of the liquid crystal layer (12) corresponding to the gaps between the prisms (110) are opaque to the light beams.

6. The optical switch (3) of claim 5, wherein the first regions of the liquid crystal layer (12) overlap with the prisms (110) with respect to an optical axis (8), and the second regions of the liquid crystal layer (12) do not overlap with the prisms (110) with respect to the optical axis (8).

7. The optical switch (3) of claim 4, wherein at least one of the at least two polarizing plates (13,14) is arranged in front of one of the two transparent substrates (10, 11), and at least one other of the at least two polarizing plates (13, 14) is arranged behind the other of the two transparent substrates (10, 11).

8. The optical switch (3) of claim 1, wherein at least one of the prisms (110) has a wedge shape or has at least one of a varying thickness or refractive index to provide a predetermined angle of deflection of the light beams.

9. An image display system (1) comprising:

a display (2) having a pixel structure and configured to emit light beams characterizing a given image;
the optical switch (3) according to claim 1, configured to pass and deflect light beams from the display (2); and
a synchronization unit (5) configured to control operations of the display (2) and the optical switch (3),
wherein the synchronization unit (5) is further configured to control the operations of the display (2) and the optical switch (3) by alternately generating and sending, to the display (2) and the optical shutter, first electrical signals that control the display (2) to emit the light beams characterizing the given image, and simultaneously control the optical shutter to operate in a first mode of operation, and
second electrical signals that control the display (2) to emit light beams characterizing an image shifted by being offset relative to the given image by a predetermined value, and simultaneously control the optical shutter to transit to a second mode of operation.

10. The image display system (1) of claim 9, further comprising at least one lens (4) positioned between the display (2) and the optical switch (3) to redirect the light beams from the display (2) towards the prism array and to form images.

11. The image display system (1) of claim 9, wherein at least one of the first and second electrical signals is a sync pulse.

12. The image display system (1) of claim 9, wherein the synchronization unit (5) comprises one or more controllers (6, 7) to control the operations of the display (2) and the optical switch (3).

13. The image display system (1) of claim 12, wherein the synchronization unit (5) comprises a first controller (6, 7) configured to control the operation of the display (2) and a second controller (7, 6) configured to control the operation of the optical switch (3).

14. The image display system (1) of claim 9, wherein the predetermined value is selected such that pixels of the shifted image are positioned between pixels of the given image.

15. The image display system (1) of claim 9, wherein a frequency of switching between the first and second electrical signals is 120 Hz or more.

**Patentansprüche**

1. Optischer Schalter (3), umfassend:

einen elektrisch gesteuerten optischen Verschluss, der konfiguriert ist, um darauf einfallende Lichtstrahlen abwechselnd durchzulassen und zu blockieren; und
ein Prismenarray, das Prismen (110) umfasst, die durch Lücken voneinander getrennt sind und konfiguriert sind, um die Lichtstrahlen abzulenken, die durch den optischen Verschluss laufen und auf die Prismen (110) in einen vorbestimmten Ablenkwinkel einfallen, und auf dem optischen Verschluss positioniert ist,
wobei der optische Verschluss konfiguriert ist, um in einem ersten Betriebsmodus, in dem die auf die Lücken zwischen den Prismen (110) des Prismenarrays einfallenden Lichtstrahlen durchgelassen werden und die auf die Prismen (110) einfallenden Lichtstrahlen blockiert werden, und in einem zweiten Betriebsmodus zu arbeiten, in dem die auf die Lücken zwischen den Prismen (110) des Prismenarrays einfallenden Lichtstrahlen blockiert werden und die auf die Prismen (110) einfallenden Lichtstrahlen durchgelassen werden.

2. Optischer Schalter (3) nach Anspruch 1, wobei einer von dem ersten Betriebsmodus und dem zweiten Betriebsmodus einem Fall entspricht, bei dem kein elektrisches Signal an den optischen Verschluss angelegt ist, und der andere einem Fall entspricht, bei dem ein elektrisches Signal an den optischen Verschluss angelegt ist.

3. Optischer Schalter (3) nach Anspruch 1, wobei das Prismenarray auf einer Seite des optischen Verschlusses, an der die Lichtstrahlen einfallen, oder auf einer Seite gegenüber der Seite, an der die Lichtstrahlen einfallen, positioniert ist.

4. Optischer Schalter (3) nach Anspruch 1, wobei der optische Verschluss umfasst: zwei transparente Substrate (10, 11);

 zwei transparente Elektroden (16, 17), die zwischen den zwei transparenten Substraten (10, 11) positioniert sind; eine Flüssigkristallschicht (12), die zwischen den zwei transparenten Substraten (10, 11) positioniert ist; und mindestens zwei Polarisationsplatten (13, 14), die konfiguriert sind, um die Lichtdurchlässigkeit von Flüssigkristallen in der Flüssigkristallschicht (12) zu steuern, wobei das Prismenarray (15) auf einer Oberfläche von mindestens einem der beiden transparenten Substrate (10, 11) angeordnet ist.

5. Optischer Schalter (3) nach Anspruch 4, wobei in dem ersten Betriebsmodus erste Bereiche der Flüssigkristallschicht (12), die den Prismen (110) entsprechen, für die Lichtstrahlen undurchlässig sind und zweite Bereiche der Flüssigkristallschicht (12), die den Lücken zwischen den Prismen (110) entsprechen, für die Lichtstrahlen transparent sind, und in dem zweiten Betriebsmodus die ersten Bereiche der Flüssigkristallschicht (12), die den Prismen (110) entsprechen, für die Lichtstrahlen transparent sind und die zweiten Bereiche der Flüssigkristallschicht (12), die den Lücken zwischen den Prismen (110) entsprechen, für die Lichtstrahlen undurchlässig sind.

6. Optischer Schalter (3) nach Anspruch 5, wobei die ersten Bereiche der Flüssigkristallschicht (12) mit den Prismen (110) in Bezug auf eine optische Achse (8) überlappen und die zweiten Bereiche der Flüssigkristallschicht (12) mit den Prismen (110) in Bezug auf die optische Achse (8) nicht überlappen.

7. Optischer Schalter (3) nach Anspruch 4, wobei mindestens eine der mindestens zwei Polarisationsplatten (13, 14) vor einem der zwei transparenten Substrate (10, 11) angeordnet ist und mindestens eine andere der mindestens zwei Polarisationsplatten (13, 14) hinter dem anderen der zwei transparenten Substrate (10, 11) angeordnet ist.

8. Optischer Schalter (3) nach Anspruch 1, wobei mindestens eines der Prismen (110) eine Keilform aufweist oder mindestens eines von einer variierenden Dicke oder einem variierenden Brechungsindex aufweist, um einen vorbestimmten Ablenkwinkel der Lichtstrahlen bereitzustellen.

9. Bildanzeigesystem (1), umfassend:

 eine Anzeige (2), die eine Pixelstruktur aufweist und konfiguriert ist, um Lichtstrahlen zu emittieren, die ein gegebenes Bild charakterisieren; den optischen Schalter (3) nach Anspruch 1, der konfiguriert ist, um Lichtstrahlen von der Anzeige (2) durchzulassen und abzulenken; und eine Synchronisationseinheit (5), die konfiguriert ist, um den Betrieb der Anzeige (2) und des optischen Schalters (3) zu steuern, wobei die Synchronisationseinheit (5) ferner konfiguriert ist, um den Betrieb der Anzeige (2) und des optischen Schalters (3) durch abwechselndes Erzeugen und Senden, an die Anzeige (2) und den optischen Verschluss, von ersten elektrischen Signalen, die die Anzeige (2) steuern, um die Lichtstrahlen zu emittieren, die das gegebene Bild charakterisieren, und gleichzeitig den optischen Verschluss steuern, um in einem ersten Betriebsmodus zu arbeiten, und von zweiten elektrischen Signalen, die die Anzeige (2) steuern, um Lichtstrahlen zu emittieren, die ein Bild charakterisieren, das verschoben ist, indem es relativ zu dem gegebenen Bild um einen vorbestimmten Wert versetzt ist, und gleichzeitig den optischen Verschluss steuern, um in einen zweiten Betriebsmodus überzugehen, zu steuern.

10. Bildanzeigesystem (1) nach Anspruch 9, ferner umfassend mindestens eine Linse (4), die zwischen der Anzeige (2) und dem optischen Schalter (3) positioniert ist, um die Lichtstrahlen von der Anzeige (2) auf das Prismenarray umzulenken und Bilder zu bilden.

11. Bildanzeigesystem (1) nach Anspruch 9, wobei mindestens eines der ersten und zweiten elektrischen Signale ein Synchronisationsimpuls ist.

12. Bildanzeigesystem (1) nach Anspruch 9, wobei die Synchronisationseinheit (5) eine oder mehrere Steuerungen (6, 7) umfasst, um den Betrieb der Anzeige (2) und des optischen Schalters (3) zu steuern.

13. Bildanzeigesystem (1) nach Anspruch 12, wobei die Synchronisationseinheit (5) eine erste Steuerung (6, 7), die konfiguriert ist, um den Betrieb der Anzeige (2) zu steuern, und eine zweite Steuerung (7, 6) umfasst, die konfiguriert ist, um den Betrieb des optischen Schalters (3) zu steuern.

14. Bildanzeigesystem (1) nach Anspruch 9, wobei der vorbestimmte Wert so ausgewählt ist, dass Pixel des verschobenen Bildes zwischen Pixeln des gegebenen Bildes positioniert sind.

15. Bildanzeigesystem (1) nach Anspruch 9, wobei eine Umschaltfrequenz zwischen dem ersten und dem zweiten elektrischen Signal 120 Hz oder mehr beträgt.

**Revendications**

1. Commutateur optique (3) comprenant :

   un obturateur optique à commande électrique configuré pour laisser passer et bloquer alternativement des faisceaux lumineux incidents sur celui-ci ; et
   un réseau de prismes comprenant des prismes (110) séparés les uns des autres par des espaces et configurés pour dévier les faisceaux lumineux qui passent à travers l'obturateur optique et sont incidents sur les prismes (110) d'un angle de déviation prédéterminé, et étant positionné sur l'obturateur optique,
   dans lequel l'obturateur optique est configuré pour fonctionner dans un premier mode de fonctionnement dans lequel les faisceaux lumineux incidents sur les espaces entre les prismes (110) du réseau de prismes sont laissés passés et les faisceaux lumineux incidents sur les prismes (110) sont bloqués, et dans un second mode de fonctionnement dans lequel les faisceaux lumineux incidents sur les espaces entre les prismes (110) du réseau de prismes sont bloqués et les faisceaux lumineux incidents sur les prismes (110) sont laissés passés.

2. Commutateur optique (3) selon la revendication 1, dans lequel l'un quelconque du premier mode de fonctionnement et du second mode de fonctionnement correspond à un cas dans lequel aucun signal électrique n'est appliqué à l'obturateur optique, et l'autre correspond à un cas dans lequel un signal électrique est appliqué à l'obturateur optique.

3. Commutateur optique (3) selon la revendication 1, dans lequel le réseau de prismes est positionné sur un côté de l'obturateur optique où les faisceaux lumineux sont incidents ou sur un côté opposé au côté où les faisceaux lumineux sont incidents.

4. Commutateur optique (3) selon la revendication 1, dans lequel l'obturateur optique comprend :

   deux substrats transparents (10, 11) ;
   deux électrodes transparentes (16, 17) positionnées entre les deux substrats transparents (10,11);
   une couche de cristaux liquides (12) positionnée entre les deux substrats transparents (10, 11) ; et
   au moins deux plaques polarisantes (13, 14) configurées pour contrôler la transmission lumineuse des cristaux liquides dans la couche de cristaux liquides (12),
   dans lequel le réseau de prismes (15) est disposé sur une surface d'au moins l'un des deux substrats transparents (10, 11).

5. Commutateur optique (3) selon la revendication 4, dans lequel dans le premier mode de fonctionnement, les premières régions de la couche de cristaux liquides (12) correspondant aux prismes (110) sont opaques aux faisceaux lumineux, et les secondes régions de la couche de cristaux liquides (12) correspondant aux espaces entre les prismes (110) sont transparents aux faisceaux lumineux, et dans le second mode de fonctionnement, les premières régions de la couche de cristaux liquides (12) correspondant aux prismes (110) sont transparentes aux faisceaux lumineux, et les secondes régions de la couche de cristaux liquides (12) correspondant aux espaces entre les prismes (110) sont opaques aux faisceaux lumineux.

6. Commutateur optique (3) selon la revendication 5, dans lequel les premières régions de la couche de cristaux liquides (12) chevauchent les prismes (110) par rapport à un axe optique (8), et les secondes régions de la couche de cristaux liquides (12) ne chevauchent pas les prismes (110) par rapport à l'axe optique (8).

7. Commutateur optique (3) selon la revendication 4, dans lequel au moins l'une des au moins deux plaques polarisantes (13, 14) est disposée face à l'un des deux substrats transparents (10, 11), et au moins une autre des au moins deux plaques polarisantes (13, 14) est disposée derrière l'autre des deux substrats transparents (10, 11).

8. Commutateur optique (3) selon la revendication 1, dans lequel au moins un des prismes (110) présente une forme de coin ou présente au moins une épaisseur ou un indice de réfraction variable pour fournir un angle de déviation prédéterminé des faisceaux lumineux.

9. Système d'affichage d'images (1) comprenant :

un affichage (2) ayant une structure de pixels et configuré pour émettre des faisceaux lumineux caractérisant une image donnée ;

le commutateur optique (3) selon la revendication 1, configuré pour laisser passer et dévier les faisceaux lumineux de l'affichage (2) ; et

une unité de synchronisation (5) configurée pour contrôler les opérations de l'affichage (2) et du commutateur optique (3),

dans lequel l'unité de synchronisation (5) est en outre configurée pour contrôler les opérations de l'affichage (2) et du commutateur optique (3) en générant et en envoyant alternativement, à l'affichage (2) et à l'obturateur optique, des premiers signaux électriques qui commandent l'affichage (2) pour émettre les faisceaux lumineux caractérisant l'image donnée, et commandent simultanément l'obturateur optique pour qu'il fonctionne dans un premier mode de fonctionnement, et

des seconds signaux électriques qui commandent l'affichage (2) pour émettre des faisceaux lumineux caractérisant une image décalée en étant décalée par rapport à l'image donnée d'une valeur prédéterminée, et commandent simultanément l'obturateur optique pour basculer dans un second mode de fonctionnement.

10. Système d'affichage d'images (1) selon la revendication 9, comprenant en outre au moins une lentille (4) positionnée entre l'affichage (2) et le commutateur optique (3) pour rediriger les faisceaux lumineux de l'affichage (2) vers le réseau de prismes et pour former des images.

11. Système d'affichage d'images (1) selon la revendication 9, dans lequel au moins l'un des premier et second signaux électriques est une impulsion de synchronisation.

12. Système d'affichage d'images (1) selon la revendication 9, dans lequel l'unité de synchronisation (5) comprend un ou plusieurs contrôleurs (6, 7) pour contrôler les opérations de l'affichage (2) et du commutateur optique (3).

13. Système d'affichage d'images (1) selon la revendication 12, dans lequel l'unité de synchronisation (5) comprend un premier contrôleur (6, 7) configuré pour contrôler le fonctionnement de l'affichage (2) et un second contrôleur (7, 6) configuré pour contrôler le fonctionnement du commutateur optique (3).

14. Système d'affichage d'images (1) selon la revendication 9, dans lequel la valeur prédéterminée est sélectionnée de telle sorte que les pixels de l'image décalée soient positionnés entre les pixels de l'image donnée.

15. Système d'affichage d'images (1) selon la revendication 9, dans lequel une fréquence de commutation entre les premier et second signaux électriques est de 120 Hz ou plus.

# FIG. 1

# FIG. 2

110     120

FIG. 3

110    120

# FIG. 4

120 110

FIG. 5

110   120

# FIG. 6

# FIG. 7

# FIG. 8

# FIG. 9

FIRST MODE OF OPERATION

RESULTING IMAGE

RESULTING IMAGE

# FIG.  10

FIG. 11

FIG. 12

**EP 3 629 072 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140049661 A1

- US 6587180 B2